# EUROPEAN PATENT SPECIFICATION

(11) **EP 2 932 066 B1**
(45) Date of publication and mention of the grant of the patent: **02.11.2016**
(21) Application number: 13795813.8
(22) Date of filing: 06.11.2013
(51) Int. Cl.: F02B 67/04, B60K 25/00

(54) **PUMP MODULE AND PISTON ENGINE**
PUMPENMODUL UND KOLBENMOTOR
MODULE DE POMPE ET MOTEUR À PISTONS

(30) Priority: 13.12.2012 FI 20126299
(43) Date of publication of application: 21.10.2015
(73) Proprietor: Wärtsilä Finland Oy, 65380 Vaasa (FI)
(72) Inventor: MATTSSON, Christer, FI-20810 Turku (FI)
(74) Representative: Berggren Oy Ab
(86) International application number: PCT/FI2013/051045
(87) International publication number: WO 2014/091068

(56) References cited:
- EP-A1- 1 447 542
- EP-A2- 1 079 092
- DE-A1- 3 012 417
- US-A- 4 573 439
- US-A1- 2003 015 166
- US-A1- 2012 138 003

## Description

### Technical field of the invention

The present invention relates to a pump module for a piston engine in accordance with the preamble of claim 1. The invention also concerns a piston engine in accordance with the preamble of the other independent claim.

### Background of the invention

Several different pumps are usually needed for different functions of internal combustion engines. Pumps are needed for the fuel injection system, cooling water circulation and lube oil circulation. In different engine types, a different number of pumps is needed. Even in the same engine model series, a different number of pumps may be needed depending on the number of cylinders and the cylinder configuration. For instance, if the engine utilizes common-rail fuel injection, one high-pressure fuel pump may be sufficient for smaller engines, whereas larger engines may need two or three high-pressure pumps for pressurizing the fuel. Therefore, different pump arrangements are needed for different engine sizes and cylinder configurations. In addition, a large number of pumps leads to complicated drive trains.

### Summary of the invention

An object of the present invention is to provide an improved pump module for a piston engine. The characterizing features of the pump module according to the invention are given in the characterizing part of claim 1. Another object of the invention is to provide an improved piston engine. The characterizing features of the piston engine according to the invention are given in the characterizing part of the other independent claim.

The pump module comprises a frame, at least one pump that is attached to the frame, a driving gearwheel that can be arranged in force transmission connection with a crankshaft of an engine, and at least one driven gearwheel for each pump of the pump module, the driven gearwheel being in force transmission connection with the driving gearwheel and arranged to drive the pump.

The piston engine according to the invention is provided with a pump arrangement comprising at least two crankshaft-driven pumps The engine comprises a driving gearwheel that is in force transmission connection with the crankshaft of the engine and at least one driven gearwheel for each of the pumps of the pump arrangement, the driven gearwheel being in force transmission connection with the driving gearwheel and arranged to drive the pump.

In a pump module and piston engine according to the invention, different pumps of the engine, such as fuel pumps, can be located conveniently at the free end of the engine. Assembly of the pump module is easy and the drive train of the pumps is simple.

At least two of the pumps are high-pressure fuel pumps for pressurizing fuel in a common-rail system, arranged in the pump module The pump module or arrangement can also comprise one or more water pumps and/or lube oil pumps. By placing water and lube oil pumps into the same module with the fuel pumps, all the main fluid connections of the engine can be located close to each other and the construction of the engine can be simplified.

According to an embodiment of the invention, the frame of the pump module is a one-piece cast. A casted frame of the pump module can be made self-supporting, which makes the assembly of the pump module easy. A casted frame can be machined according to the need to accommodate the pumps needed in each engine.

According to the invention. the high-pressure fuel pumps are arranged to be in a different phase in relation to each other. This reduces the amplitude of the torque on the driving gear.

### Brief description of the drawings

Embodiments of the invention are described below in more detail with reference to the accompanying drawings, in which
Fig. 1 shows a pump module according to an embodiment of the invention in connection with a piston engine,
Fig. 2 shows part of the engine of Fig. 1 from another direction,
Fig. 3 shows the frame of the pump module,

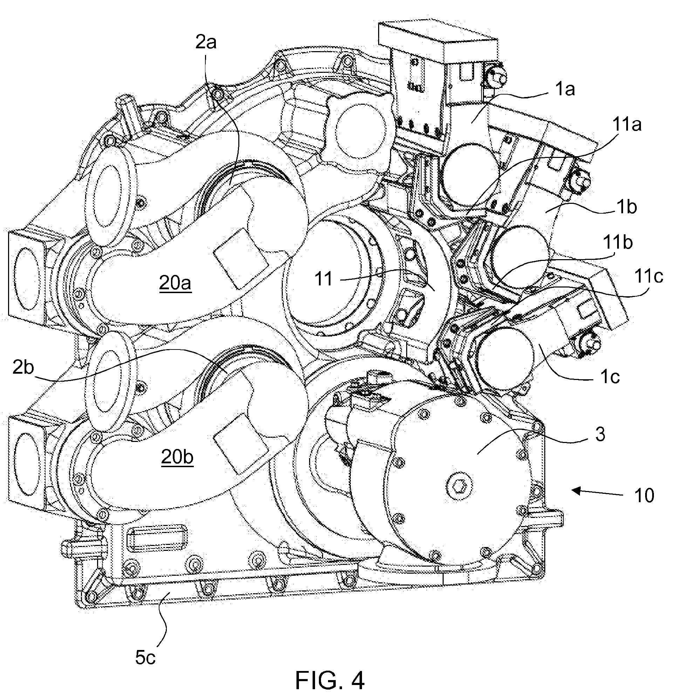

Fig. 4 shows an assembled pump module, and
Fig. 5 shows the pump module of Fig. 4 from another direction.

### Description of embodiments of the invention

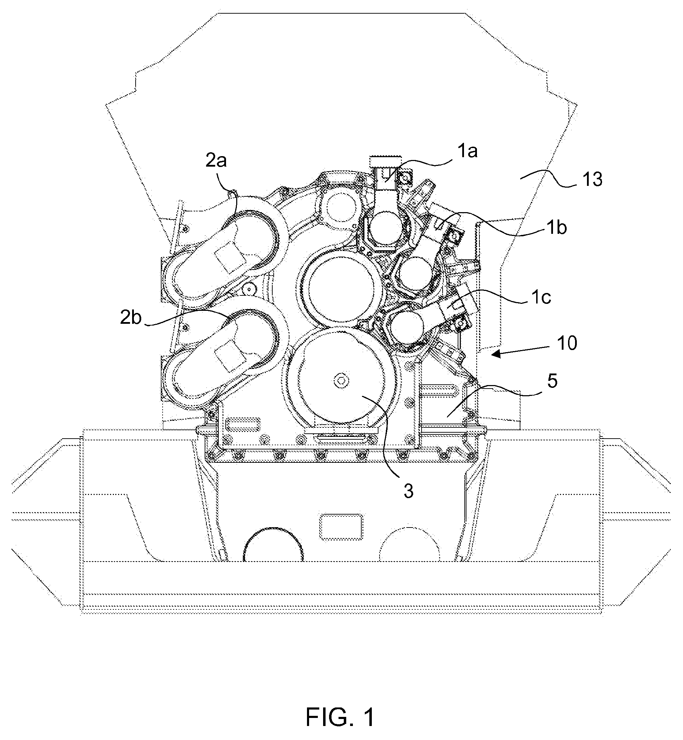

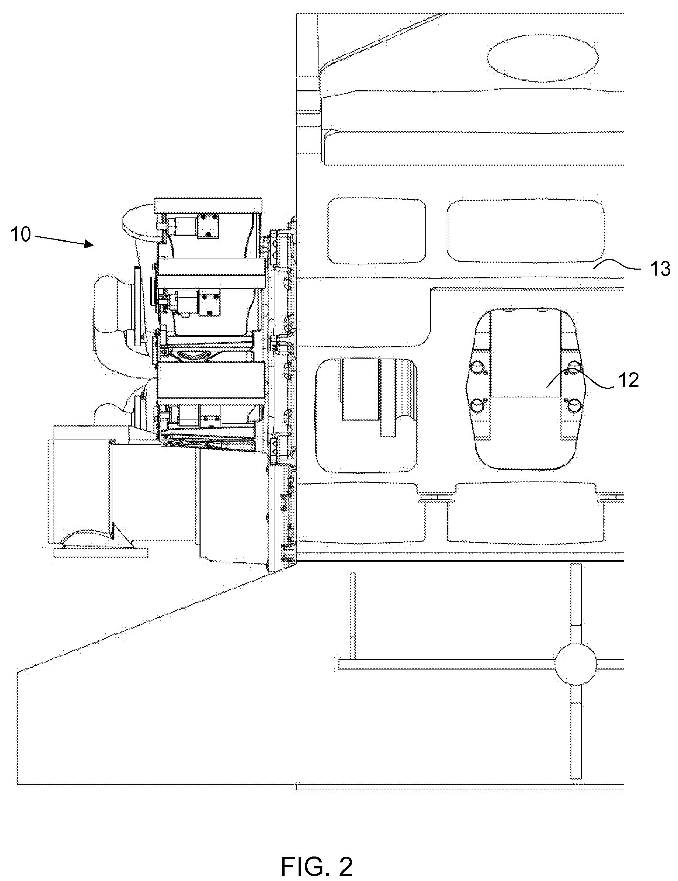

In figures 1 and 2 is shown a pump module 10 in connection with a large internal combustion engine 13, which could be, for instance, a main or an auxiliary engine of a ship, or a power plant engine that is used for producing electricity. A pump module 10 according to the invention comprises at least two pumps 1a, 1 b, 1 c, 2a, 2b, 3, which can be, for instance, a fuel pump 1 a, 1 b, 1 c, a water pump 2a, 2b or a an oil pump 3. In the embodiment of the figures, the pump module 10 comprises a first fuel pump 1 a, a second fuel pump 1b, and a third fuel pump 1 c. The fuel pumps 1 a, 1 b, 1 c are high-pressure pumps, which are used for pressurizing liquid fuel in a common-rail system. The pump module 10 also comprises a first water pump 2a and a second water pump 2b for circulating cooling water of the engine 13, and a lube oil pump 3 for circulating lube oil of the engine 13. All the pumps 1 a, 1 b, 1 c, 2a, 2b, 3, of the pump module 10 are attached to a frame 5. In the embodiment of the figures, the frame 5 is a one-piece cast. The frame 5 is thus self-supporting and enables the compact structure of the pump module 10. The pump module 10 can be preassembled and it can be easily mounted on the engine 13. The pump module 10 is attachable to the free end of the engine 13, i.e. the end that is opposite to the end from which the power is taken off. The frame 5 is attached to the free end of the engine 13 by bolts. The frame 5 forms a cover for the drive train of the different pumps 1 a, 1 b, 1 c, 2a, 2b, 3 of the module 10. The pumps 1 a, 1 b, 1 c, 2a, 2b, 3 are arranged outside the frame 5, but the rotating parts of the driving mechanism of the pumps 1 a, 1b, 1c, 2a, 2b, 3 are arranged between the engine 13 and the frame 5. The frame 5 thus works as a protective cover. It is also possible to arrange only the high-pressure fuel pumps 1a, 1b, 1c in the pump module 10 and place other pumps elsewhere, although it is beneficial to have all the pumps in the same module 10. The fuel pumps 1 a, 1 b, 1 c are attached to the frame 5 by means of support elements 11, 11 a, 11 b, 11c. Each fuel pump 1 a, 1 b, 1 c is attached to an own support element 11a, 11 b, 11c and all the individual support elements 11 a, 11 b, 11 c are attached to a main support element 11, which is attached to the frame 5.

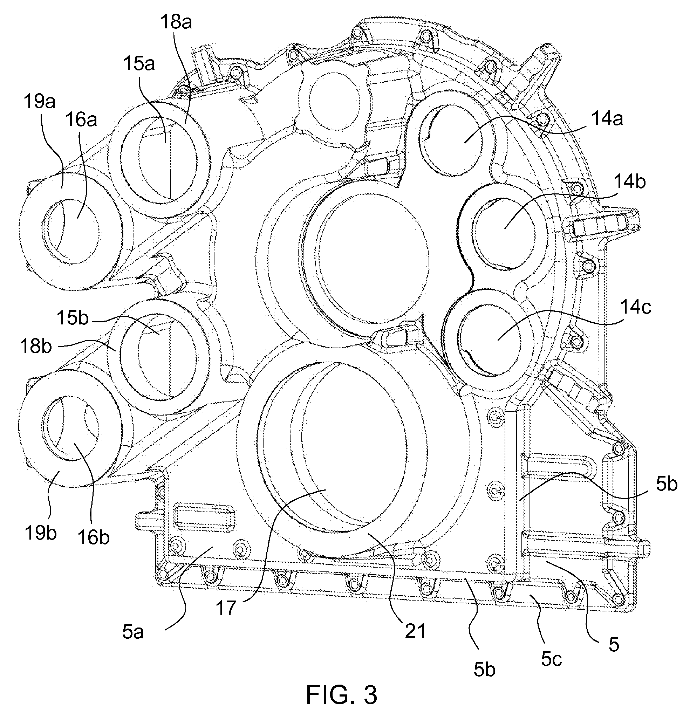

The construction of the frame 5 can be best seen in figure 3. The frame 5 is trough-shaped and comprises a cover plate 5a and side walls 5b encircling the cover plate 5a. A flange 5c encircling the side walls 5b can be used for attaching the pump module 10 to the engine 13. The frame 5 is provided with openings 14a, 14b, 14c for the fuel pumps 1 a, 1 b, 1 c, openings 15a, 16a, 15b, 16b for the water pumps 2a, 2b and with an opening 17 for the lube oil pump 3. Preferably, the openings 14a, 14b, 14c, 15a, 16a, 15b, 16b, 17 are machined according to the need, and the prefabricated frame 5 can thus be used in different engines with a different number of pumps 1a, 1b, 1c, 2a, 2b, 3. Flanges 18a, 19a, 18b, 19b around the openings 15a, 16a, 15b, 16b for the water pumps 2a, 2b can be used for fastening the water pumps 2a, 2b and the cooling water ducts 20a, 20b to the frame 5 of the pump module 10. Similarly, the flange 21 around the opening 17 for the lube oil pump 3 can be used for fastening the lube oil pump 3 to the frame 5. Instead of having separate water ducts 20a, 20b, the ducts could be integrated to the frame 5 of the pump module 10, i.e. the water ducts 20a, 20b could be part of the same casting as the frame 5. Also lube oil ducts could be part of the same casting.

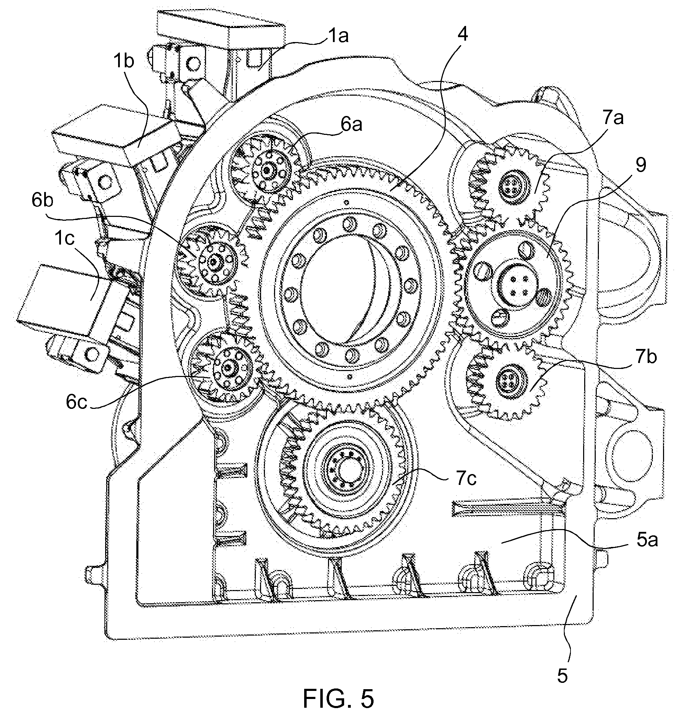

Figure 5 shows the drive train of the pump module 10. The pump module 10 is provided with a driving gearwheel 4, which can be engaged with a crankshaft 12 of the engine 13. Since the same driving gearwheel 4 is used for driving all the pumps 1 a, 1 b, 1 c, 2a, 2b, 3 of the pump module 10, the drive train can be made simple. Each of the fuel pumps 1 a, 1b, 1c is provided with a driven gearwheel 6a, 6b, 6c, which is engaged with the driving gearwheel 4. Also the lube oil pump 3 is provided with a driven gearwheel 7c that is engaged with the driving gearwheel 4. The water pumps 2a, 2b are provided with driven gearwheels 7a, 7b, but the gearwheels 7a, 7b of the water pumps 2a, 2b are not directly engaged with the driving gearwheel 4. Instead, the pump arrangement is provided with an intermediate gearwheel 9, which is arranged between the driving gearwheel 4 and the driven gearwheels 7a, 7b of the water pumps 2a, 2b. Since there is an own driven gearwheel 6a, 6b, 6c, 7a, 7b, 7c for each of the pumps 1 a, 1 b, 1 c, 2a, 2b, 2c, 3, it is easy to modify the pump module 10 according to the need. Different pump combinations can thus be selected for different engines. All the gearwheels 4, 6a, 6b, 6c, 7a, 7b, 7c, 9 of the pump module 10 are arranged in the same plane. All the driven gearwheels 6a, 6b, 6c, 7a, 7b, 7c thus surround the driving gearwheel 4. According to the invention, the fuel pumps 1 a, 1 b, 1 c are arranged to be in a different phase in relation to each other. The fuel pumps 1 a, 1 b, 1 c are thus not delivering the maximum pressure at the same time, which reduces the maximum torque on the driving gear. All the gearwheels 4, 6a, 6b, 6c, 7a, 7b, 7c, 9 are arranged in the area delimited by the side walls 5b of the frame 5. In the engine 13, the gearwheels are thus between the cover plate 5a of the frame 5 and the engine 13, which protects the drive train and increases safety of the operator of the engine 13. The pumps 1 a, 1b, 1c, 2a, 2b, 2c, 3 are on the opposite side of the cover plate 5a.

It will be appreciated by a person skilled in the art that the invention is not limited to the embodiments described above, but may vary within the scope of the appended claims.

## Claims

1. A piston engine (13) that is provided with a pump arrangement comprising at least two crankshaft-driven pumps (1a, 1b, 1c, 2a, 2b, 3) that are arranged in a pump module (10), which is attachable to the free end of the engine (13) and comprises a self-supporting frame (5), a driving gearwheel (4) that is in force transmission connection with the crankshaft (12) of the engine (13) and at least one driven gearwheel (6a, 6b, 6c, 7a, 7b, 7c) for each of the pumps (1 a, 1 b, 1 c, 2a, 2b, 3) of the pump arrangement, the driven gearwheel (6a, 6b, 6c, 7a, 7b, 7c) being in force transmission connection with the driving gearwheel (4) and arranged to drive the pump (1a, 1b, 1c, 2a, 2b, 3), **characterized in that** the pump module (10) comprises two or more high-pressure fuel pumps (1a, 1b, 1c) for pressurizing fuel in a common-rail system, and that the high-pressure fuel pumps (1a, 1b, 1c) are arranged to be in a different phase in relation to each other.

2. An engine (13) according to claim 1, **characterized in that** all high-pressure fuel pumps (1a, 1b, 1c) of the engine (13) are driven by the driving gearwheel (4).

3. An engine (13) according to claim 1 or 2, **characterized in that** the pump module comprises at least one water pump (2a, 2b) and/or lube oil pump (3).

## Patentansprüche

1. Kolbenmotor (13), der mit einer Pumpenanordnung versehen ist, die zumindest zwei kurbelwellengetriebene Pumpen (1a, 1b, 1c, 2a, 2b, 3) umfasst, welche in einem Pumpenmodul (10) eingerichtet sind, das an dem freien Ende des Motors (13) angebracht werden kann und einen selbsttragenden Rahmen (5), ein Antriebszahnrad (4), das in einer Kraftübertragungsverbindung mit der Kurbelwelle (12) des Motors (13) steht, und zumindest ein angetriebenes Zahnrad (6a, 6b, 6c, 7a, 7b, 7c) für jede der Pumpen (1a, 1b, 1c, 2a, 2b, 3) der Pumpenanordnung umfasst, wobei das angetriebene Zahnrad (6a, 6b, 6c, 7a, 7b, 7c) in einer Kraftübertragungsverbindung mit dem Antriebszahnrad (4) steht und dazu eingerichtet ist, die Pumpe (1a, 1b, 1c, 2, 2b, 3) anzutreiben, **dadurch gekennzeichnet, dass** das Pumpenmodul (10) zwei oder mehr Hochdruck-Kraftstoffpumpen (1a, 1b, 1c) umfasst, um Kraftstoff in einem Common-Rail-System mit Druck zu beaufschlagen, und dass die Hochdruck-Kraftstoffpumpen (1a, 1b, 1c) so eingerichtet sind, dass sie sich in Bezug zueinander bei einer unterschiedlichen Phase befinden.

2. Motor (13) nach Anspruch 1, **dadurch gekennzeichnet, dass** alle Hochdruck-Kraftstoffpumpen (1a, 1b, 1c) des Motors (13) durch das Antriebszahnrad (4) angetrieben werden.

3. Motor (13) nach Anspruch 1 oder 2, **dadurch gekennzeichnet, dass** das Pumpenmodul zumindest eine Wasserpumpe (2a, 2b) und/oder eine Schmierölpumpe (3) umfasst.

## Revendications

1. Moteur à pistons (13) qui est doté d'un agencement de pompes comprenant au moins deux pompes (1a, 1b, 1c, 2a, 2b, 3) entraînées par vilebrequin qui sont agencées dans un module de pompes (10), qui peut être fixé à l'extrémité libre du moteur (13) et comprend un cadre auto-porteur (5), une roue d'engrenage motrice (4) qui est en liaison de transmission de force avec le vilebrequin (12) du moteur (13) et au moins une roue d'engrenage menée (6a, 6b, 6c, 7a, 7b, 7c) pour chacune des pompes (1a, 1b, 1c, 2a, 2b, 3) de l'agencement de pompes, la roue d'engrenage menée (6a, 6b, 6c, 7a, 7b, 7c) étant en liaison de transmission de force avec la roue d'engrenage motrice (4) et agencée pour entraîner la pompe (1a, 1b, 1c, 2a, 2b, 3), **caractérisé en ce que** le module de pompes (10) comprend deux ou plusieurs pompes à carburant haute pression (1a, 1b, 1c) pour comprimer du carburant dans un système de rampe commune, et que les pompes à carburant haute pression (1a, 1b, 1c) sont agencées pour être dans une phase différente l'une par rapport à l'autre.

2. Moteur (13) selon la revendication 1, **caractérisé en ce que** toutes les pompes à carburant haute pression (1a, 1b, 1c) du moteur (13) sont entraînées par la roue d'engrenage motrice (4).

3. Moteur (13) selon la revendication 1 ou 2, **caractérisé en ce que** le module de pompes comprend au moins une pompe à eau (2a, 2b) et/ou une pompe à huile lubrifiante (3).
